# EUROPEAN PATENT SPECIFICATION

(11) **EP 3 090 933 B1**
(45) Date of publication and mention of the grant of the patent: **08.01.2020**
(21) Application number: 16165119.5
(22) Date of filing: 13.04.2016
(51) Int. Cl.: B62J 1/18, B62J 1/26, B29C 33/10, B29C 45/00, B29C 44/00

(54) **METHOD OF MANUFACTURING MAIN BODY OF BICYCLE SADDLE**
VERFAHREN ZUR HERSTELLUNG DES HAUPTKÖRPERS EINES FAHRRADSATTELS
PROCÉDÉ DE FABRICATION D'UN CORPS PRINCIPAL DE SELLE DE BICYCLETTE

(30) Priority: 08.05.2015 TW 104114821
(43) Date of publication of application: 09.11.2016
(73) Proprietor: Velo Enterprise Co., Ltd., Dajia Township, Taichung County 437 (TW)
(72) Inventor: YU, Tsai-Yun, 437 Taichung City (TW)
(74) Representative: Becker Kurig Straus

(56) References cited:
- EP-A1- 0 653 279
- CN-A- 103 568 188
- US-A- 6 074 001
- US-B1- 6 685 862

## Description

### BACKGROUND OF THE INVENTION

### 1. Field of the Invention

The present invention relates generally to a method of manufacturing a main body of a bicycle saddle.

### 2. Description of the Related Art

A main body of a conventional bicycle saddle primarily includes an elastomer, a hard bottom shell and a cover layer. The elastomer is made of foam material such as expanded polyurethane (hereinafter referred to as PU), expanded ethylene-vinyl acetate (hereinafter referred to as EVA) or expanded polyethylene (hereinafter referred to as PE) for providing appropriate ability of cushion and support. The bottom shell is mounted to the bottom of the elastomer for supporting the whole main body of the saddle and being connected with a seat post of the bicycle through other elements. The cover layer, which may be made of synthetic plastic leather for example, covers the top and the periphery of the elastomer for contacting the cyclist.

In the traditional method, the disposal of the cover layer is performed after the elastomer is combined with the bottom shell in a way that a manual work is adopted to cover the top of the elastomer with the cover layer, strain the cover layer to fit it to the elastomer, then fold back the circumference of the cover layer to the downside of the bottom shell and fix the circumference of the cover layer to the bottom shell by means of glue or staple gun. However, such method of disposing the cover layer is not only time-consuming, but also liable to make the cover layer strained unevenly so as to cause the cover layer to oblique or unfit the elastomer. In particular, the cover layer made of synthetic plastic leather, which has low elasticity, is more liable to have the aforesaid problem. Besides, as to the main body of the saddle having a complicated shape, such as a main body having a central through hole, the disposal of the cover layer performed by the aforesaid manual work is more difficult.

CN 103 568 188 A and EP 0653 279 A describe conventional bicycle saddle manufacturing methods. European Patent No. EP1919683 discloses a bicycle saddle manufacturing method, wherein while the elastomer is formed in a forming mold by foam molding, the cover layer and the bottom shell provided at the periphery thereof with a groove are also disposed in the forming mold, so that the elastomer is formed and combined with the cover layer and the bottom shell at the same time. After the elastomer is completely formed, the part of the circumference of the cover layer, which is not combined with the elastomer, is cut away, and a rim is formed in the groove of the bottom shell by injection molding, so that the rim covers the peripheries of the bottom shell and the elastomer, thereby providing waterproof effect. Although such method of disposing the cover layer is prevented from the aforesaid problem of manual work, the whole manufacturing process is complicated.

US Patent Publication No. 2013/0174971 discloses a bicycle saddle manufacturing method, wherein after the elastomer is combined with the bottom shell, the cover layer is fixed to the elastomer and the bottom shell in an enclosed chamber applying a pneumatic pressure to fit the cover layer to the elastomer. Although such method of disposing the cover layer is prevented from the aforesaid problem of manual work, it makes the saddle manufacturing process complicated.

### SUMMARY OF THE INVENTION

The present invention has been accomplished in view of the above-noted circumstances. It is an objective of the present invention to provide a method of manufacturing a main body of a bicycle saddle, which can prevent the cover layer from being strained unevenly and unfitting the elastomer, prevent the periphery of the main body of the bicycle saddle from unevenness, and simplify the manufacturing process of the main body of the bicycle saddle.

To attain the above objective, the present invention provides a method of manufacturing a main body of a bicycle saddle according to claim 1,7 or 10, which includes the steps of:
a) attaching a cover layer to an inner wall of a mold cavity of a forming mold by vacuum suction in a way that the cover layer has a main area attached to the inner wall of the mold cavity and a circumferential area located around the main area;
b) heating a base material in the mold cavity of the forming mold to form the base material into an elastomer in a way that the main area of the cover layer is combined with the elastomer and fits the elastomer, and combining a bottom shell with the elastomer; and
c) folding back the circumferential area of the cover layer to a bottom of the bottom shell and fixing the circumferential area of the cover layer at the bottom of the bottom shell.

Because the cover layer is attached to the inner wall of the mold cavity before the base material is heated and formed into the elastomer in the mold cavity, the cover layer can fit the elastomer perfectly when being combined with the elastomer, so that the procedures of folding back and fixing the circumferential area of the cover layer in the step c) can be performed easily. In this way, the problem of the manual work adopted in the traditional method of disposing the cover layer, i.e. the problem that the cover layer tends to be strained unevenly, can be avoided. Besides, the circumferential area of the cover layer is folded back to the bottom of the bottom shell and then fixed to the bottom shell, so the peripheries of the elastomer and the bottom shell are completely covered with the cover layer, so that the periphery of the main body of the bicycle saddle is even and smooth. When the main body of the bicycle saddle is in use, the aforesaid feature can avoid or lower the cyclist's uncomfortable feeling resulted from the friction between the crotch of the cyclist and the periphery of the main body of the bicycle saddle. Moreover, the cover layer is combined with the elastomer while the base material is heated and formed into the elastomer, so the manufacturing process of the main body of the bicycle saddle is simplified.

Preferably, the base material used in the step b) may be a liquid foamable material; in the step b), the liquid foamable material is injected into the mold cavity of the forming mold to be expanded and formed into the elastomer on the main area of the cover layer. In this way, the manufacturing process of the main body of the bicycle saddle is further simplified, and the cover layer can fit the elastomer more perfectly.

Preferably, in the step b) the bottom shell may be combined with the elastomer in the forming mold while the base material is heated and formed into the elastomer, so as to further simplify the manufacturing process of the main body of the bicycle saddle.

Preferably, in the step b) a connection layer may be disposed between the bottom shell and the elastomer. More preferably, the connection layer may be a plastic film, such as PE film, Poly-Vinyl Chloride (hereinafter referred to as PVC) film, and so on. In this way, the connection layer can prevent the base material in the mold cavity from overflowing onto the bottom shell to contaminate the exposed surface at the bottom of the bottom shell, and increase the connecting strength between the bottom shell and the elastomer.

Preferably, the forming mold may include an upper die and a lower die, and the mold cavity is located at the lower die; the base material used in the step b) may be a liquid foamable material; in the step b), the liquid foamable material is injected into the mold cavity, the bottom shell is disposed at the upper die, and then the lower die is covered with the upper die, so that the liquid foamable material is expanded and formed into the elastomer between the bottom shell and the cover layer, and meanwhile the bottom shell and the cover layer are combined with the elastomer in the forming mold. More preferably, in the step b) a connection layer may be disposed at one of the upper die and the lower die before the lower die is covered with the upper die; while the lower die is covered with the upper die, the bottom shell is combined with the elastomer through the connection layer.

Besides, the forming mold may further include a pressing frame; in the step a) the circumferential area of the cover layer is disposed between the pressing frame and the lower die; while the lower die is covered with the upper die, the upper die is pressed on the pressing frame. In the step b), a connection layer may be disposed at one of the upper die and the lower die before the lower die is covered with the upper die; while the lower die is covered with the upper die, the connection layer is disposed between the pressing frame and one of the lower die and the upper die, and the bottom shell is combined with the elastomer through the connection layer.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a flow chart of a method of manufacturing a main body of a bicycle saddle according to a first preferred embodiment of the present invention;
FIGS. 2-8 are schematic sectional views showing the process of the method of manufacturing the main body of the bicycle saddle according to the first preferred embodiment of the present invention;
FIG. 9 is a schematic perspective view of the main body of the bicycle saddle according to the first preferred embodiment of the present invention;
FIG. 10 is a flow chart of a method of manufacturing a main body of a bicycle saddle which does not form part of the present invention;
FIG. 11 is similar to FIG. 6, but lacking a bottom shell; and
FIG. 12 is similar to FIG. 6, but having a connection layer additionally.

### DETAILED DESCRIPTION OF THE INVENTION

First of all, it is to be mentioned that same reference numerals used in the following preferred embodiments and the appendix drawings designate same or similar elements throughout the specification for the purpose of concise illustration of the present invention. Besides, when it is mentioned that an element is combined with another element, it means that the former element is directly combined with the latter element, or the former element is indirectly combined with the latter element through one or more other elements between aforesaid former and latter elements.

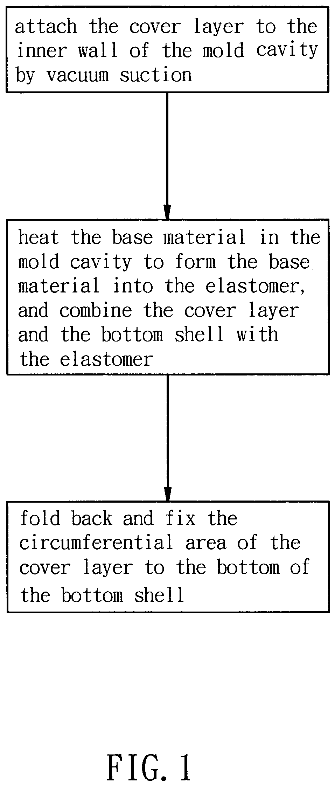

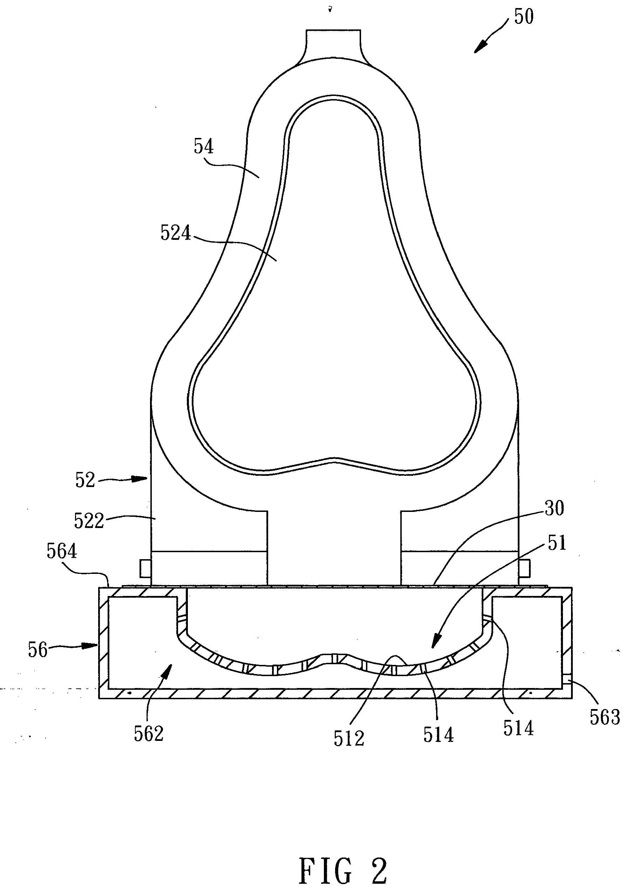

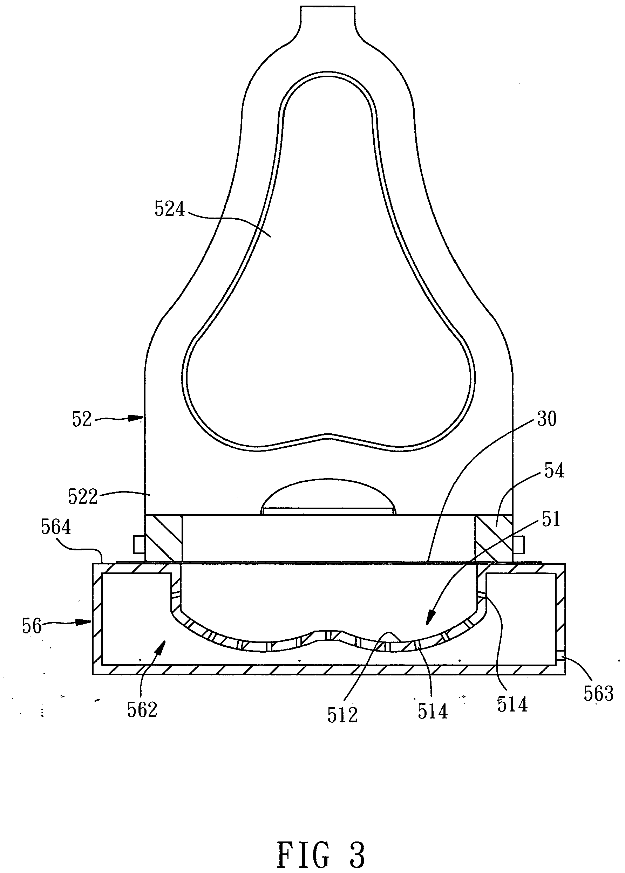

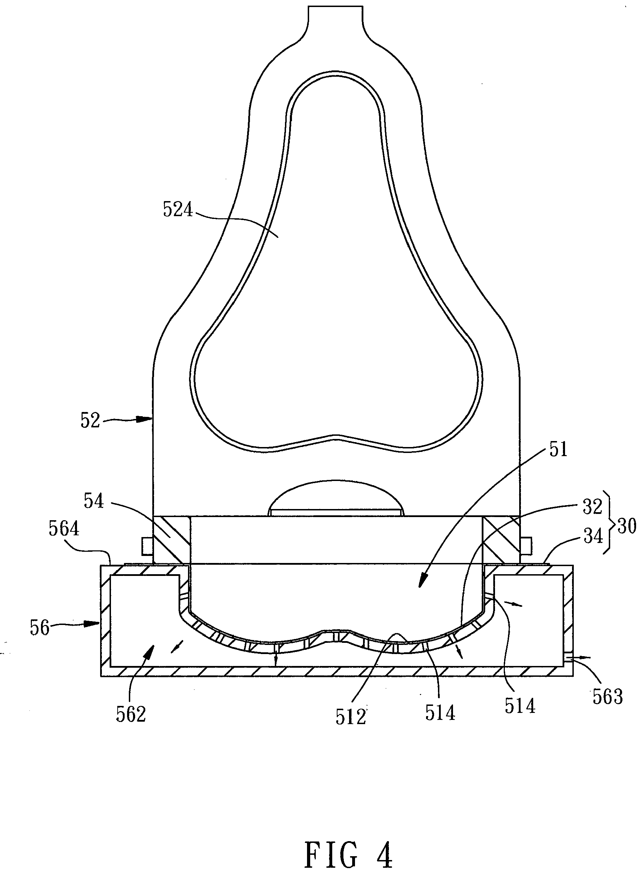

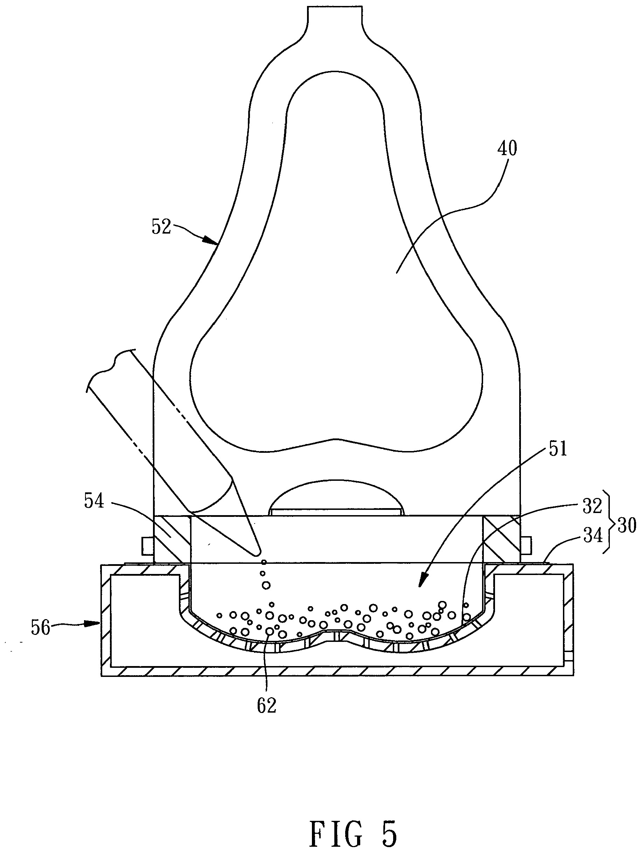

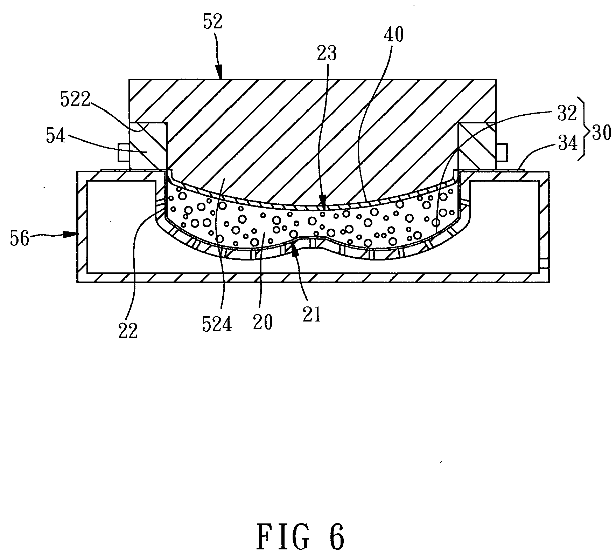

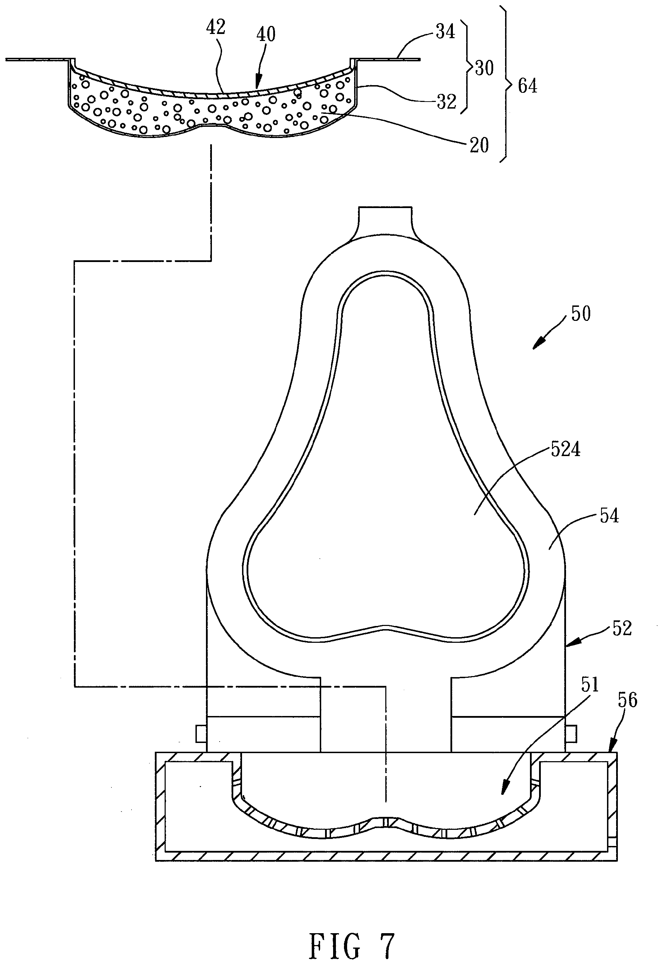

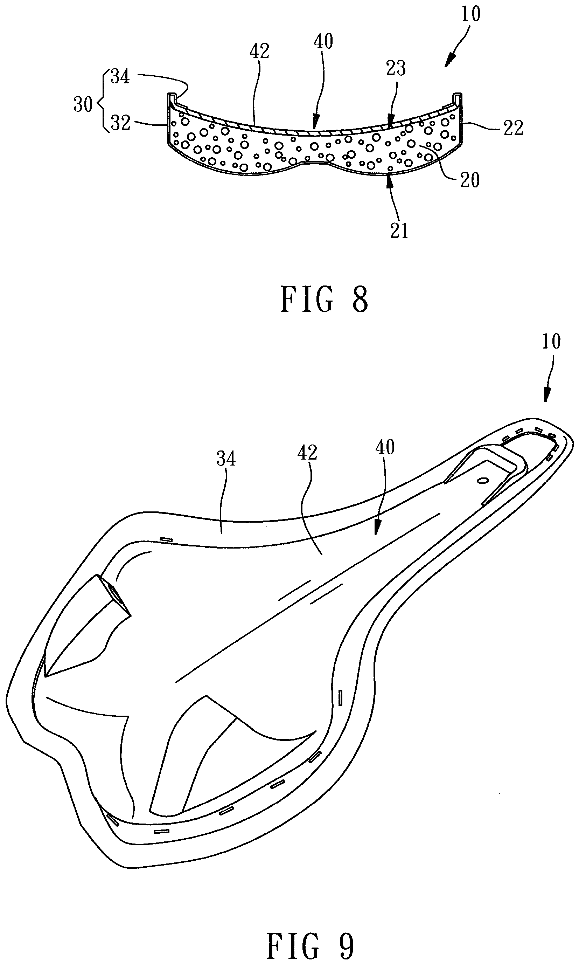

Referring to FIGS. 1-9, a method of manufacturing a main body of a bicycle saddle according to a first preferred embodiment of the present invention is adapted for manufacturing a main body 10 as shown in FIGS. 8-9. The main body 10 of the bicycle saddle includes an elastomer 20, a cover layer 30 and a bottom shell 40. The elastomer 20 is made of foam material, which is usually closed cell foam, such as EVA, PE, or PU, for providing the elastomer 20 ability of cushion and support. However, the material of the elastomer 20 is not limited to the aforesaid materials. In this embodiment, the cover layer 30 is made of a cloth having a smooth surface without any hole/pore, such as synthetic plastic leather. The cover layer 30 covers a top 21 and a periphery 22 of the elastomer 20 for contacting the cyclist. The bottom shell 40 is a hard shell made of plastics and mounted to a bottom 23 of the elastomer 20. The method of manufacturing the main body 10 of the bicycle saddle includes the following steps.
a) As shown in FIGS. 2-4, attach the cover layer 30 to an inner wall 512 of a mold cavity 51 of a forming mold 50 by vacuum suction in a way that the cover layer 30 has a main area 32 attached to the inner wall 512 of the mold cavity 51 and a circumferential area 34 located around the main area 32.
   In this embodiment, the forming mold 50 includes an upper die 52, a pressing frame 54 and a lower die 56, which are pivotally connected with each other, and the mold cavity 51 is located at the lower die 56. The upper die 52 has a bottom surface 522, and a protrusion 524 protruded from the bottom surface 522. The internal contour of the pressing frame 54 is approximately the same in shape with the external contour of the protrusion 524. The lower die 56 is a shell provided therein with a space 562 and provided at one side thereof with an air exhausting passage 563 which communicates with the space 562. The mold cavity 51 is concaved from a top surface 564 of the lower die 56 and approximately shaped as the main body 10 of the bicycle saddle. The inner wall 512 of the mold cavity 51 is provided with a plurality of through holes 514 communicating with the space 562.
   In the step a), the cover layer 30 is placed on the top surface 564 of the lower die 56, and then the pressing frame 54 is pressed on the top surface 564 with the cover layer 30 disposed therebetween, as shown in FIG. 3. The cover layer 30 is tightly attached to the inner wall 512 of the mold cavity 51 by a way that the air in the space 562 and the mold cavity 51 is exhausted through the air exhausting passage 563 to create a vacuum in the space 562. In this way, the cover layer 30 has the main area 32 attached to the inner wall 512 of the mold cavity 51 and the circumferential area 34 located between the pressing frame 54 and the top surface 564, as shown in FIG. 4.
b) As shown in FIGS. 5-6, heat a base material in the mold cavity 51 of the forming mold 50 to form the base material into the elastomer 20 in a way that the main area 32 of the cover layer 30 is combined with the elastomer 20 and fits the elastomer 20, and combine the bottom shell 40 with the bottom 23 of the elastomer20.
   In this embodiment, the base material is a liquid foamable material 62 which is a mixture of a plastic material, a foaming agent and other additive. The plastic material may, but not limited to, be EVA, PE, PU, and so on. When the lower die 56 is not yet covered with the upper die 52 as shown in FIG. 5, the liquid foamable material 62 is injected or poured into the mold cavity 51, and the bottom shell 40 is disposed at the protrusion 524 of the upper die 52. After that, the lower die 56 is covered with the upper die 52 as shown in FIG. 6, so that the mold cavity 51 becomes enclosed. Because the forming mold 50 in this embodiment includes the pressing frame 54 located between the upper die 52 and the lower die 56, the upper die 52 is pressed on the pressing frame 54 while the lower die 56 is covered with the upper die 52. After that, the liquid foamable material 62 in the enclosed mold cavity 51 is heated to be expanded and formed into the elastomer 20 by the forming mold 50. Specifically speaking, the liquid foamable material 62 is expanded and formed into the elastomer 20 between the bottom shell 40 and the main area 32 of the cover layer 30; meanwhile, the main area 32 of the cover layer 30 is combined with the top 21 and the periphery 22 of the elastomer 20, and the bottom shell 40 is combined with the bottom 23 of the elastomer 20.
   It will be appreciated that the way of forming the elastomer 20 is not limited to that provided in this embodiment, as long as the elastomer 20 is heated and shaped in the mold cavity 51 and combined with the cover layer 30 at the same time. For example, the base material may be a sheet-shaped or block-shaped foamable material to be put into the mold cavity 51 to be expanded and formed into the elastomer 20 in the step b). Alternately, the base material may be a semi-finished elastomer of the main body of the bicycle saddle, which is preliminarily expanded before the step b), and put into the mold cavity 51 to be secondarily expanded and formed into the elastomer 20 in the step b). Besides, the bottom shell 40 may be coated on a surface thereof with glue before being combined with the elastomer 20, so as to increase the connecting strength between the bottom shell 40 and the elastomer 20.
   As shown in FIG. 7, after the step b) is accomplished, the semi-finished main body 64 of the bicycle saddle can be taken out of the mold cavity 51 of the forming mold 50 before the following step c) is performed. At this time, the circumferential area 34 of the cover layer 30 is located around the periphery of the bottom 42 of the bottom shell 40.
c) As shown in FIGS. 8-9, fold back the circumferential area 34 of the cover layer 30 to the bottom 42 of the bottom shell 40 and fix the circumferential area 34 of the cover layer 30 at the bottom 42 of the bottom shell 40.

After the aforesaid step b) is accomplished, the manufacture of the main body 10 of the bicycle saddle is almost finished except that a manual work should be adopted to embellish the circumferential area 34 of the cover layer 30, which is the step c). The circumferential area 34 of the cover layer 30 may, but not limited to, be partially cut away to have appropriate size, and then folded back from the periphery 22 of the elastomer 20 to the downside of the bottom 23 of the elastomer 20. In more detail, the circumferential area 34 of the cover layer 30 is folded back to the periphery of the bottom 42 of the bottom shell 40. After that, the circumferential area 34 is fixed at the periphery of the bottom 42 of the bottom shell 40 by means of glue or staple gun, so that the manufacture of the main body 10 of the bicycle saddle is accomplished.

In the method of the present invention, it is easy to fix and fit the cover layer 30 to the elastomer 20 in the step b), so that the procedures of folding back and fixing the circumferential area 34 of the cover layer 30 are easy to be performed. In this way, the problem of the manual work adopted in the traditional method of disposing the cover layer can be avoided, and the manufacturing process of the main body of the bicycle saddle can be simplified. Besides, the peripheries of the elastomer and the bottom shell are completely covered with the cover layer, so the periphery of the main body of the bicycle saddle is even and smooth, which can avoid or lower the cyclist's uncomfortable feeling resulted from the friction between the crotch of the cyclist and the periphery of the main body of the bicycle saddle.

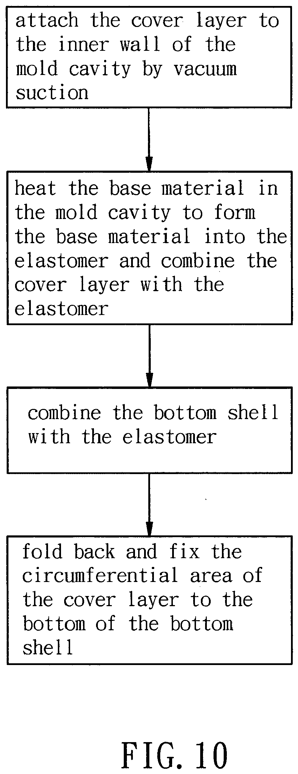

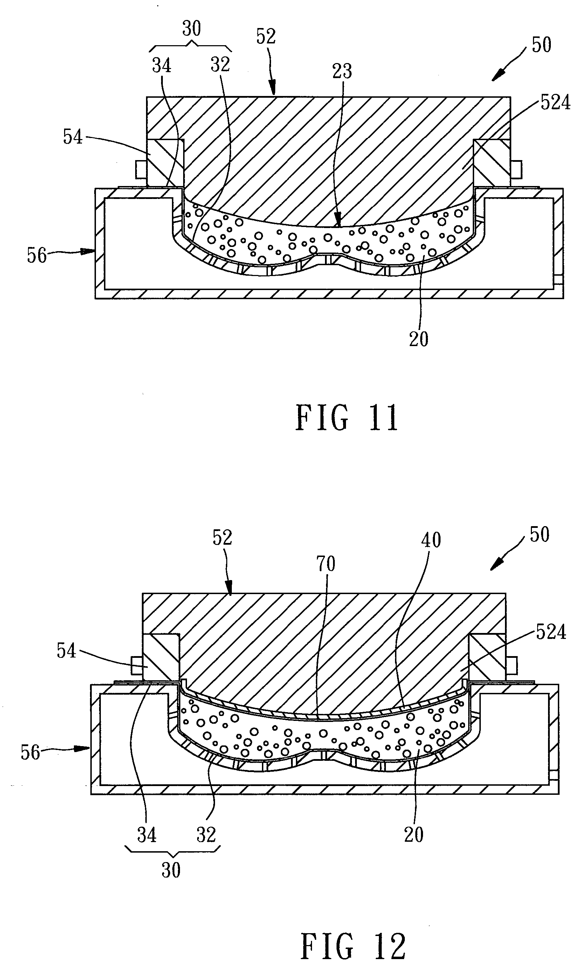

Referring to FIG. 10, the method of manufacturing the main body of the bicycle saddle according to an embodiment which does not form part of the present invention is different from the method of the aforesaid embodiment in the step b). In the step b) of the aforesaid embodiment, the bottom shell 40 is combined with the elastomer 20 in the forming mold 50 while the base material is heated and formed into the elastomer 20. However, in the step b) of this embodiment, the base material is heated and formed into the elastomer 20 and meanwhile the elastomer 20 is combined with the cover layer 30; after that, the bottom shell 40 is combined with the elastomer 20. This means, as shown in FIG. 11, while the base material is heated and formed into the elastomer 20, the bottom shell 40 is not disposed in the forming mold 50, and the elastomer 20 is formed between the protrusion 524 of the upper die 52 and the cover layer 30. After that, the combination of the elastomer 20 and the cover layer 30 is taken out of the forming mold 50, and then the bottom shell 40 is mounted to the bottom 23 of the elastomer 20. The aforesaid procedure of combining the bottom shell 40 with the bottom 23 of the elastomer 20 is not limited to be performed by means of the same mold wherein the elastomer 20 is formed, but may use different mold or jig, or use a manual work to glue the bottom shell 40 to the elastomer 20. As to the whole method of manufacturing the main body of the bicycle saddle, the method of the first preferred embodiment is relatively simpler, but the method of this embodiment can still prevent the cover layer from being strained unevenly and unfitting the elastomer and prevent the periphery of the main body of the bicycle saddle from unevenness, and is still simpler than the conventional method of manufacturing the main body of the bicycle saddle.

Referring to FIG. 12, on the condition that the elastomer 20 is formed and combined with the bottom shell 40 at the same time, a connection layer 70 may be disposed between the bottom shell 40 and the elastomer 20 in the step b). The connection layer 70 may, but not limited to, be a plastic film, such as PE film or PVC film. In the embodiment as shown in FIG. 12, before the lower die 56 is covered with the upper die 52, the connection layer 70 is disposed at the lower die 56, located between the pressing frame 54 and the lower die 56, and covers the mold cavity 51. While the lower die 56 is covered with the upper die 52, the bottom shell 40 is combined with the elastomer 20 through the connection layer 70. Alternately, before the lower die 56 is covered with the upper die 52, the connection layer 70 may be disposed at the upper die 52 and covers the protrusion 524; while the lower die 56 is covered with the upper die 52, the connection layer 70 is located between the pressing frame 54 and the upper die 52, and the bottom shell 40 is combined with the elastomer 20 through the connection layer 70. Of course, glue can be applied to increase the connecting strength between the connection layer 70 and the bottom shell 40 and the connecting strength between the connection layer 70 and the elastomer 20.

The connection layer 70 can increase the connecting strength between the bottom shell 40 and the elastomer 20. Besides, if the foamable material 62 in the mold cavity 51 is so much as to overflow when the lower die 56 is covered with the upper die 52, the connection layer 70 can prevent the foamable material 62 from contacting the exposed surface of the bottom shell 40, so as to avoid the follow-up procedure of cleaning the overflowing material.

Besides, the method of the present invention may be applied to manufacture the main body of the bicycle saddle having a hollow portion opened on the top and bottom surfaces of the main body. In such application, the circumferential area 34 of the cover layer 30 mentioned in the step a) of the method of the present invention includes a section corresponding in position to the aforesaid hollow portion, and the section is put through the bottom shell's through hole located at the hollow portion to be folded back and fixed to the bottom of the bottom shell in the step c).

## Claims

1. A method of manufacturing a main body (10) of a bicycle saddle, which is **characterized in** comprising the steps of:
a) attaching a cover layer (30) to an inner wall (512) of a mold cavity (51) of a forming mold (50) by vacuum suction in a way that the cover layer (30) has a main area (32) attached to the inner wall (512) of the mold cavity (51) and a circumferential area (34) located around the main area (32);
b) disposing a base material in the mold cavity (51) of the forming mold (50);
c) disposing a connection layer (70) on the base material;
d) heating the forming mold (50) to form the base material into an elastomer (20) in a way that the main area (32) of the cover layer (30) is combined with the elastomer (20) and fits the elastomer (20), and combining a bottom shell (40) with the elastomer (20) in a way that the connection layer (70) is located between the bottom shell (40) and the elastomer (20); and
e) folding back the circumferential area (34) of the cover layer (30) to a bottom (42) of the bottom shell (40) and fixing the circumferential area (34) of the cover layer (30) at the bottom (42) of the bottom shell (40).

2. The method of claim 1, which is **characterized in that** the base material used in the step b) is a liquid foamable material (62); in the step b), the liquid foamable material (62) is injected into the mold cavity (51) of the forming mold (50) to be expanded and formed into the elastomer (20) on the main area (32) of the cover layer (30).

3. The method of claim 1, which is **characterized in that** in the step b) the bottom shell (40) is combined with the elastomer (20) in the forming mold (50) while the base material is heated and formed into the elastomer (20).

4. The method of claim 1, which is **characterized in that** the connection layer (70) is a plastic film.

5. The method of claim 1, which is **characterized in that** the base material used in the step b) is a sheet-shaped or block-shaped foamable material.

6. The method of claim 1, which is **characterized in that** the base material used in the step b) is a semi-finished elastomer of the main body of the bicycle saddle.

7. A method of manufacturing a main body (10) of a bicycle saddle, which comprises the steps of:
a) attaching a cover layer (30) to an inner wall (512) of a mold cavity (51) of a forming mold (50) by vacuum suction in a way that the cover layer (30) has a main area (32) attached to the inner wall (512) of the mold cavity (51) and a circumferential area (34) located around the main area (32);
b) heating a base material in the mold cavity (51) of the forming mold (50) to form the base material into an elastomer (20) in a way that the main area (32) of the cover layer (30) is combined with the elastomer (20) and fits the elastomer (20), and combining a bottom shell (40) with the elastomer (20); and
c) folding back the circumferential area (34) of the cover layer (30) to a bottom (42) of the bottom shell (40) and fixing the circumferential area (34) of the cover layer (30) at the bottom (42) of the bottom shell (40);
wherein the method is **characterized in that** the forming mold (50) comprises an upper die (52) and a lower die (56), and the mold cavity (51) is located at the lower die (56); the base material used in the step b) is a liquid foamable material (62) and is injected into the mold cavity (51); the bottom shell (40) is disposed at the upper die (52), a connection layer (70) is disposed at one of the upper die (52) and the lower die (56), and then the lower die (56) is covered with the upper die (52), so that the liquid foamable material (62) is expanded and formed into the elastomer (20) between the connection layer (70) and the cover layer (30), and meanwhile the bottom shell (40) is combined with the elastomer (20) through the connection layer (70) and the cover layer (30) is combined with the elastomer (20) in the forming mold (50).

8. The method of claim 7, which is **characterized in that** the connection layer (70) is a plastic film.

9. The method of claim 7 which is **characterized in that** the forming mold (50) further comprises a pressing frame (54); in the step a) the circumferential area (34) of the cover layer (30) is disposed between the pressing frame (54) and the lower die (56); while the lower die (56) is covered with the upper die (52), the upper die (52) is pressed on the pressing frame (54).

10. A method of manufacturing a main body (10) of a bicycle saddle, which comprises the steps of:
a) attaching a cover layer (30) to an inner wall (512) of a mold cavity (51) of a forming mold (50) by vacuum suction in a way that the cover layer (30) has a main area (32) attached to the inner wall (512) of the mold cavity (51) and a circumferential area (34) located around the main area (32);
b) heating a base material in the mold cavity (51) of the forming mold (50) to form the base material into an elastomer (20) in a way that the main area (32) of the cover layer (30) is combined with the elastomer (20) and fits the elastomer (20), and combining a bottom shell (40) with the elastomer (20); and
c) folding back the circumferential area (34) of the cover layer (30) to a bottom (42) of the bottom shell (40) and fixing the circumferential area (34) of the cover layer (30) at the bottom (42) of the bottom shell (40);
wherein the method is **characterized in that** the forming mold (50) comprises an upper die (52) and a lower die (56), and the mold cavity (51) is located at the lower die (56); the base material used in the step b) is a sheet-shaped or block-shaped foamable material and is disposed into the mold cavity (51); the bottom shell (40) is disposed at the upper die (52), a connection layer (70) is disposed on the sheet-shaped or block-shaped foamable material and then the lower die (56) is covered with the upper die (52), so that the sheet-shaped or block-shaped foamable material is formed into the elastomer (20) between the connection layer (70) and the cover layer (30), and meanwhile the bottom shell (40) is combined with the elastomer (20) through the connection layer (70) and the cover layer (30) is combined with the elastomer (20) in the forming mold (50).

11. The method of claim 10, which is **characterized in that** the connection layer (70) is a plastic film.

12. The method of claim 10 which is **characterized in that** the forming mold (50) further comprises a pressing frame (54); in the step a) the circumferential area (34) of the cover layer (30) is disposed between the pressing frame (54) and the lower die (56); while the lower die (56) is covered with the upper die (52), the upper die (52) is pressed on the pressing frame (54).

## Patentansprüche

1. Verfahren zur Herstellung eines Hauptkörpers (10) eines Fahrradsattels, das gekennzeichnet ist, dass es die Schritte umfasst:
a) Anbringen einer Deckschicht (30) an eine innere Wand (512) einer Gießform-Vertiefung (51) einer Gießform (50) mittels Unterdruck-Ansaugen, so dass die Deckschicht (30) einen Hauptbereich (32) aufweist, der an der inneren Wand (512) der Gießform-Vertiefung (51) angebracht ist, und einen Umfangsbereich (34), der um den Hauptbereich (32) angeordnet ist;
b) Bereitstellen eines Basismaterials in der Gießform-Vertiefung (51) der Gießform (50);
c) Bereitstellen einer Verbindungsschicht (70) auf dem Basismaterial;
d) Erwärmen der Gießform (50), um das Basismaterial in ein Elastomer (20) zu formen, so dass der Hauptbereich (32) der Deckschicht (30) mit dem Elastomer (20) kombiniert wird und zu dem Elastomer (20) passt, und Kombinieren einer Bodenlage (40) mit dem Elastomer (20), so dass die Verbindungsschicht (70) zwischen der Bodenlage (40) und dem Elastomer (20) angeordnet ist; und
e) Rückfalten des Umfangsbereichs (34) der Deckschicht (30) auf den Boden (42) der Bodenlage (40) und Fixieren des Umfangsbereichs (34) der Deckschicht (30) am Boden (42) der Bodenlage (40).

2. Verfahren nach Anspruch 1, das gekennzeichnet ist, dass das in Schritt b) verwendete Basismaterial ein flüssiges schäumbares Material (62) ist; dass in Schritt b) das flüssige schäumbare Material (62) in die Gießform-Vertiefung (51) der Gießform (50) injiziert wird, um sich auszudehnen und in das Elastomer (20) auf dem Hauptbereich (32) der Deckschicht (30) ausgebildet zu werden.

3. Verfahren nach Anspruch 1, das gekennzeichnet ist, dass in Schritt b) die Bodenlage (40) mit dem Elastomer (20) in der Gießform (50) kombiniert wird, während das Basismaterial erwärmt und in das Elastomer (20) ausgebildet wird.

4. Verfahren nach Anspruch 1, das gekennzeichnet ist, dass die Verbindungsschicht (70) eine Kunststofffolie ist.

5. Verfahren nach Anspruch 1, das gekennzeichnet ist, dass das in Schritt b) verwendete Basismaterial ein Lagen-förmiges oder Block-förmiges schäumbares Material ist.

6. Verfahren nach Anspruch 1, das gekennzeichnet ist, dass das in Schritt b) verwendete Basismaterial ein halbfertiges Elastomer des Hauptkörpers des Fahrradsattels ist.

7. Verfahren zur Herstellung eines Hauptkörpers (10) eines Fahrradsattels, welches die Schritte umfasst:
a) Anbringen einer Deckschicht (30) an eine innere Wand (512) einer Gießform-Vertiefung (51) einer Gießform (50) mittels Unterdruck-Ansaugen, so dass die Deckschicht (30) einen Hauptbereich (32) aufweist, der an die innere Wand (512) der Gießform-Vertiefung (51) angebracht ist und einen Umfangsbereich (34), der um den Hauptbereich (32) angeordnet ist;
b) Erwärmen eines Basismaterials in der Gießform-Vertiefung (51) der Gießform (50), um ein Basismaterial in ein Elastomer (20) auszubilden, so dass der Hauptbereich (32) der Deckschicht (30) mit dem Elastomer (20) kombiniert ist und zu dem Elastomer (20) passt, und Kombinieren einer Bodenlage (40) mit dem Elastomer (20); und
c) Rückfalten des Umfangsbereichs (34) der Deckschicht (30) auf einen Boden (42) der Bodenlage (40) und Fixieren des Umfangsbereichs (34) der Deckschicht (30) an dem Boden (42) der Bodenlage (40);
wobei das Verfahren gekennzeichnet ist, dass die Gießform (50) eine obere Düse (52) und eine untere Düse (56) umfasst, und dass die Gießform-Vertiefung (51) an der unteren Düse (56) angeordnet ist; dass das in Schritt b) verwendete Basismaterial ein flüssiges schäumbares Material (62) ist und in die Gießform-Vertiefung (51) injiziert wird; dass die Bodenlage (40) an der oberen Düse (52) vorgesehen ist, dass eine Verbindungsschicht (70) an einer der oberen Düse (52) und der unteren Düse (56) vorgesehen ist, und die untere Düse (56) dann mit der oberen Düse (52) bedeckt wird, so dass sich das flüssige schäumbare Material (62) ausdehnt und in das Elastomer (20) zwischen der Verbindungsschicht (70) und der Deckschicht (30) ausgebildet wird, und zwischenzeitlich die Bodenlage (40) mit dem Elastomer (20) durch die Verbindungsschicht (70) kombiniert wird und die Deckschicht (30) mit dem Elastomer (20) in der Gießform (50) kombiniert wird.

8. Verfahren nach Anspruch 7, das gekennzeichnet ist, dass die Verbindungsschicht (70) eine Kunststofffolie ist.

9. Verfahren nach Anspruch 7 das gekennzeichnet ist, dass die Gießform (50) weiter einen Druckrahmen (54) umfasst; dass in Schritt a) der Umfangsbereich (34) der Deckschicht (30) zwischen dem Druckrahmen (54) und der unteren Düse (56) vorgesehen ist; dass während die untere Düse (56) mit der oberen Düse (52) bedeckt ist, die obere Düse (52) auf den Druckrahmen (54) gedrückt wird.

10. Verfahren zur Herstellung eines Hauptkörpers (10) eines Fahrradsattels, welches die Schritte umfasst:
a) Anbringen einer Deckschicht (30) an eine innere Wand (512) einer Gießform-Vertiefung (51) einer Gießform (50) mittels Unterdruck-Ansaugen, so dass die Deckschicht (30) einen Hauptbereich (32) aufweist, der an der inneren Wand (512) der Gießform-Vertiefung (51) angebracht ist und einen Umfangsbereich (34), der um den Hauptbereich (32) angeordnet ist;
b) Erhitzen eines Basismaterial in der Gießform-Vertiefung (51) der Gießform (50), um das Basismaterial in ein Elastomer (20) auszubilden, so dass der Hauptbereich (32) der Deckschicht (30) mit dem Elastomer (20) kombiniert wird und zu dem Elastomer (20) passt, und Kombinieren einer Bodenlage (40) mit dem Elastomer (20); und
c) Rückfalten des Umfangsbereichs (34) der Deckschicht (30) auf einen Boden (42) der Bodenlage (40) und Fixieren des Umfangsbereichs (34) der Deckschicht (30) an dem Boden (42) der Bodenlage (40);
wobei das Verfahren **dadurch gekennzeichnet ist, dass** die Gießform (50) eine obere Düse (52) und ein untere Düse (56) umfasst, und dass die Gießform-Vertiefung (51) an der unteren Düse (56) angeordnet ist; dass das in Schritt b) verwendete Basismaterial ein Lagen-förmiges oder Block-förmiges schäumbares Material ist und in der Gießform-Vertiefung (51) angeordnet ist; dass die Bodenlage (40) an der oberen Düse (52) vorgesehen ist, eine Verbindungsschicht (70) auf dem Lagen-förmigen oder Block-förmigen schäumbare Material vorgesehen ist und dass dann die untere Düse (56) mit der oberen Düse (52) bedeckt wird, so dass das Lagen-förmige oder Block-förmige schäumbare Material in das Elastomer (20) zwischen der Verbindungsschicht (70) und der Deckschicht (30) gebildet wird, und dass zwischenzeitlich die Bodenlage (40) mit dem Elastomer (20) durch die Verbindungsschicht (70) kombiniert wird und die Deckschicht (30) mit dem Elastomer (20) in der Gießform (50) kombiniert wird.

11. Verfahren nach Anspruch 10, das gekennzeichnet ist, dass die Verbindungsschicht (70) eine Kunststofffolie ist.

12. Verfahren nach Anspruch 10, das gekennzeichnet ist, dass die Gießform (50) weiter einen Druckrahmen (54) umfasst; dass in Schritt a) der Umfangsbereich (34) der Deckschicht (30) zwischen dem Druckrahmen (54) und der unteren Düse (56) vorgesehen ist; dass während die untere Düse (56) mit der oberen Düse (52) bedeckt ist, die obere Düse (52) auf den Druckrahmen (54) gedrückt.

## Revendications

1. Procédé de fabrication d'un corps principal (10) d'une selle de bicyclette, **caractérisé en ce qu'**il comprend les étapes de :
a) fixation d'une couche de recouvrement (30) à une paroi interne (512) d'une cavité de moule (51) d'un moule de formage (50) par aspiration sous vide de telle sorte que la couche de recouvrement (30) possède une zone principale (32) fixée à la paroi interne (512) de la cavité de moule (51) et une zone circonférentielle (34) située autour de la zone principale (32) ;
b) disposition d'un matériau de base dans la cavité de moule (51) du moule de formage (50) ;
c) disposition d'une couche de liaison (70) sur le matériau de base ;
d) chauffage du moule de formage (50) pour former le matériau de base en un élastomère (20) de telle sorte que la zone principale (32) de la couche de recouvrement (30) est combinée avec l'élastomère (20) et s'adapte à l'élastomère (20) et combinaison d'une coque inférieure (40) avec l'élastomère (20) de telle sorte que la couche de liaison (70) se trouve entre la coque inférieure (40) et l'élastomère (20) ; et
e) repliage de la zone circonférentielle (34) de la couche de recouvrement (30) vers un fond (42) de la coque inférieure (40) et fixation de la zone circonférentielle (34) de la couche de recouvrement (30) au niveau du fond (42) de la coque inférieure (40).

2. Procédé selon la revendication 1, **caractérisé en ce que** le matériau de base utilisé dans l'étape b) est un matériau expansible liquide (62) ; dans l'étape b), le matériau expansible liquide (62) est injecté dans la cavité de moule (51) du moule de formage (50) pour être expansé et formé en élastomère (20) sur la zone principale (32) de la couche de recouvrement (30).

3. Procédé selon la revendication 1, **caractérisé en ce que**, dans l'étape b), la coque inférieure (40) est combinée avec l'élastomère (20) dans le moule de formage (50) pendant que le matériau de base est chauffé et formé en élastomère (20).

4. Procédé selon la revendication 1, **caractérisé en ce que** la couche de liaison (70) est un film plastique.

5. Procédé selon la revendication 1, **caractérisé en ce que** le matériau de base utilisé dans l'étape b) est un matériau expansible en forme de feuille ou en forme de bloc.

6. Procédé selon la revendication 1, **caractérisé en ce que** le matériau de base utilisé dans l'étape b) est un élastomère semi-fini du corps principal de la selle de bicyclette.

7. Procédé de fabrication d'un corps principal (10) d'une selle de bicyclette, qui comprend les étapes de :
a) fixation d'une couche de recouvrement (30) à une paroi interne (512) d'une cavité de moule (51) d'un moule de formage (50) par aspiration sous vide de telle sorte que la couche de recouvrement (30) possède une zone principale (32) fixée à la paroi interne (512) de la cavité de moule (51) et une zone circonférentielle (34) située autour de la zone principale (32) ;
b) chauffage d'un matériau de base dans la cavité de moule (51) du moule de formage (50) pour former le matériau de base en un élastomère (20) de telle sorte que la zone principale (32) de la couche de recouvrement (30) est combinée avec l'élastomère (20) et s'adapte à l'élastomère (20) et combinaison d'une coque inférieure (40) avec l'élastomère (20) ; et
c) repliage de la zone circonférentielle (34) de la couche de recouvrement (30) vers un fond (42) de la coque inférieure (40) et fixation de la zone circonférentielle (34) de la couche de recouvrement (30) au niveau du fond (42) de la coque inférieure (40) ;
le procédé étant **caractérisé en ce que** le moule de formage (50) comprend une matrice supérieure (52) et une matrice inférieure (56) et la cavité de moule (51) est située au niveau de la matrice inférieure (56) ; le matériau de base utilisé dans l'étape b) est un matériau expansible liquide (62) et est injecté dans la cavité de moule (51) ; la coque inférieure (40) est disposée au niveau de la matrice supérieure (52), une couche de liaison (70) est disposée au niveau de l'une parmi la matrice supérieure (52) et la matrice inférieure (56), et puis la matrice inférieure (56) est recouverte de la matrice supérieure (52), de telle sorte que le matériau expansible liquide (62) est expansé et formé en élastomère (20) entre la couche de liaison (70) et la couche de recouvrement (30) et, pendant ce temps, la coque inférieure (40) est combinée avec l'élastomère (20) via la couche de liaison (70) et la couche de recouvrement (30) est combinée avec l'élastomère (20) dans le moule de formage (50).

8. Procédé selon la revendication 7, **caractérisé en ce que** la couche de liaison (70) est un film plastique.

9. Procédé selon la revendication 7, **caractérisé en ce que** le moule de formage (50) comprend en outre un cadre de pressage (54) ; dans l'étape a), la zone circonférentielle (34) de la couche de recouvrement (30) est disposée entre le cadre de pressage (54) et la matrice inférieure (56) ; pendant que la matrice inférieure (56) est recouverte par la matrice supérieure (52), la matrice supérieure (52) est pressée sur le cadre de pressage (54).

10. Procédé de fabrication d'un corps principal (10) d'une selle de bicyclette, qui comprend les étapes de :
a) fixation d'une couche de recouvrement (30) à une paroi interne (512) d'une cavité de moule (51) d'un moule de formage (50) par aspiration sous vide de telle sorte que la couche de recouvrement (30) possède une zone principale (32) fixée à la paroi interne (512) de la cavité de moule (51) et une zone circonférentielle (34) située autour de la zone principale (32) ;
b) chauffage d'un matériau de base dans la cavité de moule (51) du moule de formage (50) pour former le matériau de base en un élastomère (20) de telle sorte que la zone principale (32) de la couche de recouvrement (30) est combinée avec l'élastomère (20) et s'adapte à l'élastomère (20) et combinaison d'une coque inférieure (40) avec l'élastomère (20) ; et
c) repliage de la zone circonférentielle (34) de la couche de recouvrement (30) vers un fond (42) de la coque inférieure (40) et fixation de la zone circonférentielle (34) de la couche de recouvrement (30) au niveau du fond (42) de la coque inférieure (40) ;
le procédé étant **caractérisé en ce que** le moule de formage (50) comprend une matrice supérieure (52) et une matrice inférieure (56) et la cavité de moule (51) est située au niveau de la matrice inférieure (56) ; le matériau de base utilisé dans l'étape b) est un matériau expansible en forme de feuille ou en forme de bloc et est disposé dans la cavité de moule (51) ; la coque inférieure (40) est disposée au niveau de la matrice supérieure (52), une couche de liaison (70) est disposée sur le matériau expansible en forme de feuille ou en forme de bloc, et puis la matrice inférieure (56) est recouverte par la matrice supérieure (52), de telle sorte que le matériau expansible en forme de feuille ou en forme de bloc est formé en élastomère (20) entre la couche de liaison (70) et la couche de recouvrement (30) et pendant ce temps la coque inférieure (40) est combinée avec l'élastomère (20) via la couche de liaison (70) et la couche de recouvrement (30) est combinée avec l'élastomère (20) dans le moule de formage (50).

11. Procédé selon la revendication 10, **caractérisé en ce que** la couche de liaison (70) est un film plastique.

12. Procédé selon la revendication 10, **caractérisé en ce que** le moule de formage (50) comprend en outre un cadre de pressage (54) ; dans l'étape a), la zone circonférentielle (34) de la couche de recouvrement (30) est disposée entre le cadre de pressage (54) et la matrice inférieure (56) ; pendant que la matrice inférieure (56) est recouverte de la matrice supérieure (52), la matrice supérieure (52) est pressée sur le cadre de pressage (54).
